# EUROPEAN PATENT APPLICATION

(11) **EP 4 600 987 A2**
(43) Date of publication of application: **13.08.2025**
(21) Application number: 24212977.3
(22) Date of filing: 14.11.2024
(51) Int. Cl.: H01G 4/33, H01G 4/012, H01G 4/228, H10D 1/68, H01G 4/38

(54) **CAPACITOR, MANUFACTURING METHOD THEREOF, AND CAPACITOR ASSEMBLY USING THE SAME**

(30) Priority: 22.12.2023 KR 20230189622
(71) Applicant: Samsung Electro-Mechanics Co., Ltd., Suwon-si, Gyeonggi-do 16674 (KR)
(72) Inventor: Choi, Jungsub, 16674 Suwon-si, Gyeonggi-do (KR); Lee, Kwangmook, 16674 Suwon-si, Gyeonggi-do (KR); Won, Jun-Goo, 16674 Suwon-si, Gyeonggi-do (KR); Han, Myeong Woo, 16674 Suwon-si, Gyeonggi-do (KR); Jeong, Jaeyong, 16674 Suwon-si, Gyeonggi-do (KR); Park, Jihoon, 16674 Suwon-si, Gyeonggi-do (KR); Park, Gwangpyo, 16674 Suwon-si, Gyeonggi-do (KR); Choi, A Young, 16674 Suwon-si, Gyeonggi-do (KR)
(74) Representative: Grünecker Patent- und Rechtsanwälte PartG mbB

(57) **Abstract**

A disclosed capacitor may include a body that has through-holes extending from a first surface to a second surface, a first internal electrode disposed on the inner surfaces of the body positioned inside the through-holes, on the first surface of the body, and on the second surface of the body, a dielectric layer disposed on the first internal electrode, a second internal electrode disposed on the dielectric layer, a first external electrode disposed on the first surface and connected to the first internal electrode, and a second external electrode disposed on the second surface and connected to the second internal electrode.

## Description

### CROSS-REFERENCE TO RELATED APPLICATION

This application claims priority to and the benefit of Korean Patent Application No. 10-2023-0189622 filed in the Korean Intellectual Property Office on December 22, 2023, the entire contents of which are incorporated herein by reference.

### BACKGROUND OF THE INVENTION

### (a) Field of the Invention

The present disclosure relates to a capacitor, a manufacturing method thereof, and capacitor assembly using the same.

### (b) Description of the Related Art

Electronic components that are used in electronic devices include capacitors, inductors, piezoelectric devices, varistors, thermistors, and so on. Among ceramic electronic components, multilayer capacitors have the advantage that they are small, high capacitance is guaranteed, and it is easy to mount them, and thus can be used in a variety of electronic devices.

For example, multilayer capacitors may be used in chip-like capacitors that are mounted on substrates of various electronic products such as imaging devices, for example, liquid crystal displays (LCDs), plasma display panels (PDPs), and organic light-emitting diodes (OLEDs), computers, personal portable terminals, and smart phones so as to serve to charge or discharge.

With the recent trend toward smaller and thinner electronic products, the demand for capacitors which have higher capacity than conventional multilayer capacitors is increasing.

### SUMMARY OF THE INVENTION

The present disclosure attempts to provide a capacitor capable of securing high capacitance through a stack of two or more capacitors.

However, objects which the embodiments of the present invention attempt to achieve are not limited to the above-mentioned object, and can be variously expanded without departing from the technical spirit and scope of the present invention.

A capacitor according to an embodiment includes a body that has through-holes extending from a first surface to a second surface, a first internal electrode disposed on the inner surfaces of the body positioned inside the through-holes, on the first surface, and on the second surface of the body, a dielectric layer disposed on the first internal electrode, a second internal electrode disposed on the dielectric layer, a first external electrode disposed on the first surface and connected to the first internal electrode, and a second external electrode disposed on the second surface and connected to the second internal electrode.

Also, the first internal electrode disposed on the inner surfaces of the body, the first internal electrode disposed on the first surface of the body, and the first internal electrode disposed on the second surface of the body may be connected to one another.

Further, the dielectric layer may be disposed on each of the inner surfaces of the body, the first surface of the body, and the second surface of the body, and the second internal electrode may be disposed on each of the inner surfaces of the body, the first surface of the body, and the second surface of the body.

Furthermore, the second internal electrode disposed on the inner surfaces of the body, the second internal electrode disposed on the first surface of the body, and the second internal electrode disposed on the second surface of the body may be connected to one another.

Moreover, another second external electrode may be disposed on the first surface of the body, and another first external electrode may be disposed on the second surface of the body.

In addition, the second internal electrode may fill the inner spaces of the body formed by the through-holes.

Also, the first external electrode may include a sub electrode portion that is in contact with the first internal electrode, and a main electrode portion that is in contact with the sub electrode portion, and the cross-sectional area of the main electrode portion on a plane parallel with the first surface of the body may be smaller than the cross-sectional area of the sub electrode portion on a plane parallel with the first surface of the body.

Further, the dielectric layer and the second internal electrode may extend from the first surface of the body to the upper surface of at least a portion of an outer portion on the sub electrode portion.

Furthermore, between the second internal electrode disposed on the outer portion of the sub electrode portion and the main electrode portion, a protective layer may be positioned.

Furthermore, the capacitor may further include protective layers disposed on the first surface of the body and on the second surface of the body, and at least partially cover the second internal electrode. The protective layers may have openings which expose at least a portion of the first external electrode and at least a portion of the second external electrode.

Moreover, the body may include anodizing aluminum oxide (AAO).

A manufacturing method of a capacitor according to an embodiment includes preparing a body with through-holes extending from the first surface to the second surface, and forming a first internal electrode on the inner surfaces of the body positioned inside the through-holes, the first surface of the body, and the second surface of the body, forming a sub electrode portion connected to the first internal electrode, forming a dielectric layer on the first internal electrode, forming a second internal electrode on the dielectric layer, disposing a main electrode portion on the sub electrode portion such that the main electrode portion and the sub electrode portion together form a first external electrode, and forming a second external electrode on the second internal electrode.

Further, the forming of the sub electrode portion may include forming a mask on the first surface of the body, exposing some portions of the first internal electrode by etching the mask, and applying a conductive material on the area from which the mask has been etched.

Furthermore, the forming of the dielectric layer may include covering the portions of the sub electrode portion exposed between the through-holes by a dielectric material.

Moreover, the forming of the dielectric layer may include covering the sub electrode portion on the first surface by a dielectric material, and the forming of the second internal electrode may include covering the dielectric material on the sub electrode portion by a conductive material.

In addition, the forming of the main electrode portion may include removing at least some portions of the dielectric layer on the sub electrode portion and at least some portion of the second internal electrode formed on the sub electrode portion, and depositing a conductive material on the portion of the upper surface of the sub electrode portion where the dielectric layer and the second internal electrode have been removed.

Also, the forming of the second internal electrode may include filling the inner spaces of the body formed along the through-holes with a conductive material.

In a capacitor assembly according to an embodiment include a first capacitor and a second capacitor, each of which includes a body that has through-holes extending from a first surface to a second surface, a first internal electrode disposed on the inner surfaces of the body positioned inside the through-holes, on the first surface of the body, and on the second surface of the body, a dielectric layer disposed on the first internal electrode, a second internal electrode disposed on the dielectric layer, a first external electrode disposed on the first surface and connected to the first internal electrode, and a second external electrode disposed on the second surface and connected to the second internal electrode. The first external electrode of the first capacitor and the second external electrode of the second capacitor are connected to each other.

Further, another second external electrodes may be disposed on the first surfaces, and another first external electrodes may be disposed on the second surfaces, and the first external electrode on the first surface of the first capacitor and the second external electrode on the second surface of the second capacitor may be connected to each other, and the second external electrode on the first surface of the first capacitor and the first external electrode on the second surface of the second capacitor may be connected to each other.

Furthermore, another second external electrode may be disposed on the first surfaces, and another first external electrode may be disposed on the second surfaces, and the first external electrode on the first surface of the first capacitor and the first external electrode on the second surface of the second capacitor may be connected to each other, and the second external electrode on the first surface of the first capacitor and the second external electrode on the second surface of the second capacitor may be connected to each other.

According to at least one embodiment of the embodiments, it is possible to provide high capacitance by stacking a plurality of capacitors.

### BRIEF DESCRIPTION OF THE DRAWINGS

FIG. 1 is a perspective view illustrating a body according to an embodiment.
FIG. 2 is a cross-sectional view illustrating a capacitor incorporating the body of FIG. 1.
FIG. 3 is a cross-sectional view illustrating a connection of capacitors as shown in FIG. 2.
FIG. 4 is a cross-sectional view illustrating another example of a capacitor connection.
FIGS. 5 to 14 are cross-sectional views illustrating a manufacturing method of a capacitor according to an embodiment.
FIG. 15 is a cross-sectional view illustrating a capacitor according to another embodiment.
FIG. 16 is a cross-sectional view illustrating a connection of the capacitor shown in FIG. 15.

### DETAILED DESCRIPTION OF THE EMBODIMENTS

Hereinafter, embodiments of the present invention will be described in detail with reference to the accompanying drawings such that those skilled in the art can easily implement them. The drawings and description are to be regarded as illustrative in nature and not restrictive. Like reference numerals designate like elements throughout the specification. Further, some constituent elements in the drawing may be exaggerated, omitted, or schematically illustrated, and a size of each constituent element does not reflect the actual size entirely.

The accompanying drawings are provided for helping to easily understand embodiments disclosed in the present specification, and the technical spirit disclosed in the present specification is not limited by the accompanying drawings, and it will be appreciated that the present invention includes all of the modifications, equivalent matters, and substitutes included in the spirit and the technical scope of the present invention.

Terms including an ordinary number, such as first and second, are used for describing various constituent elements, but the constituent elements are not limited by the terms. The terms are used only to discriminate one constituent element from another constituent element.

Further, it will be understood that when an element such as a layer, film, region, or substrate is referred to as being 'on' another element, it can be directly on the other element or intervening elements may also be present. In contrast, when an element is referred to as being 'directly on' another element, there are no intervening elements present. Further, when an element is 'on' a reference portion, the element is located above or below the reference portion, and it does not necessarily mean that the element is located 'above' or 'on' in a direction opposite to gravity.

In the present application, it will be appreciated that terms 'including' and 'having' are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance. Therefore, unless explicitly described to the contrary, the word 'comprise', and variations such as 'comprises' or 'comprising', will be understood to imply the inclusion of stated elements but not the exclusion of any other elements.

In the entire specification, when it is referred to as 'on a plane', it means when a target part is viewed from above, and when it is referred to as 'on a cross-section', it means when the cross-section obtained by cutting a target part vertically is viewed from the side.

Throughout the specification, when it is referred to as "connected", this does not only mean that two or more constituent elements are directly connected, but may mean that two or more constituent elements are indirectly connected through another constituent element, are physically connected, electrically connected, or are integrated even though two or more constituent elements are referred as different names depending on a location and a function.

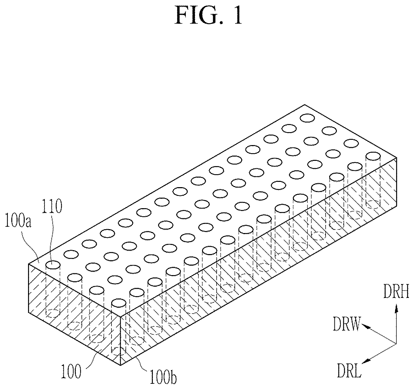

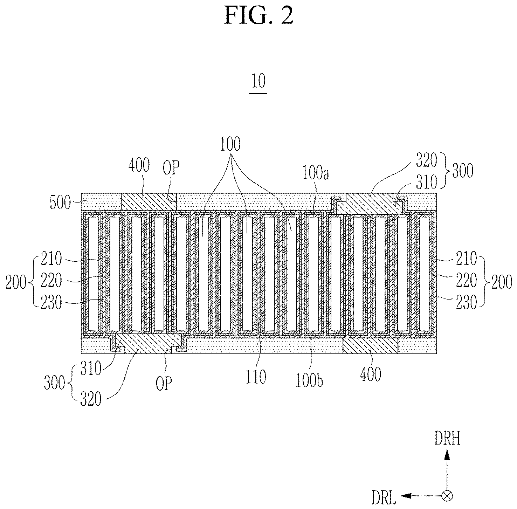

FIG. 1 is a perspective view illustrating a body according to an embodiment, and FIG. 2 is a cross-sectional view illustrating a capacitor incorporating the body of FIG. 1.

Referring to FIGS. 1 and 2, a capacitor 10 according to the present embodiment may include a body 100, a capacitor portion 200, first external electrodes 300, second external electrodes 400, and protective layers 500.

First, to clearly describe the present embodiment, directions are defined as follow: the DRH axis, the DRL axis, and the DRW axis shown in the drawings represent axes indicating the thickness direction, length direction, and width direction of the capacitor 10, respectively. The thickness direction (DRH-axis direction) may be a direction perpendicular to the upper surface or lower surface of the body 100. For example, the thickness direction (DRH-axis direction) may be a direction parallel with the direction in which through-holes 110 that are formed in the body 100 extend. The length direction (DRL-axis direction) may be a direction that is parallel with the upper surface or lower surface of the body 100 and intersects (or is perpendicular to) the thickness direction (DRH-axis direction). For example, the length direction (DRL-axis direction) may be the direction in which the first external electrodes 300 and the second external electrodes 400 face each other. The width direction (DRW-axis direction) may be a direction that is parallel with the upper surface or lower surface of the body 100 and intersects (or is perpendicular to) the thickness direction (DRH-axis direction) and the length direction (DRL-axis direction) simultaneously.

The body 100 may have a hexahedral shape, but the shape thereof is not limited thereto. The body 100 has a first surface 100a and a second surface 100b positioned opposite to each other. The first surface 100a and the second surface 100b may face each other in the thickness direction (DRH-axis direction). Also, the first surface 100a and the second surface 100b may be formed parallel with the length direction (DRL-axis direction) and/or the width direction (DRW-axis direction). In FIG. 1, it is shown that the first surface 100a is positioned on the upper side and the second surface 100b is positioned on the lower side. Accordingly, in the present embodiment, for convenience, the first surface 100a may be referred to as the upper surface, the second surface 100b may be referred to as the lower surface, and the direction in which the first surface 100a and the second surface 100b face each other may be referred to as the vertical direction. However, the positions of the first surface 100a and the second surface 100b are not limited thereto.

The body 100 may be formed on an insulating material. A plurality of through-holes 110 may be formed so as to pass through the body 100 from the first surface 100a to the second surface 100b. The through-holes 110 may be columnar apertures connecting the first surface 100a and the second surface 100b. As an example, the body 100 may be formed of porous anodic aluminum oxide (AAO), and the through-holes 110 may be formed by fine pores formed in the anodizing aluminum oxide. The aspect ratio of the through-holes 110 may be in a range from 2000 to 3000, and the interval between the through-holes 110 may be about several tens of nanometers to several hundreds of nanometers. However, the aspect ratio of the through-holes 110 and the interval between the through-holes 110 are not limited thereto. For example, the size, interval, and depth of the through-holes 110 may be adjusted by changing conditions such as anodization voltage, electrolyte type and concentration, and temperature.

The capacitor portion 200 includes a first internal electrode 210, a dielectric layer 220, and a second internal electrode 230.

The first internal electrode 210 may be disposed on the inner surfaces of the body 100 positioned inside the through-holes 110. The first internal electrode 210 may be in contact with the surfaces of the through-holes 110 formed inside the body 100. In some embodiments, the first internal electrode 210 may be positioned on the sections of the first surface 100a of the body 100 between the through-holes 110 adjacent to each other, and may be positioned on the sections of the second surface 100b of the body 100 between the through-holes 110 adjacent to each other. Accordingly, in the first internal electrode 210, the regions positioned on the through-holes 110 adjacent to each other may be connected to each other by the regions positioned on the first surface 100a and second surface 100b of the body 100. In the first internal electrode 210, the regions positioned on the first surface 100a of the body 100 and the regions positioned on the second surface 100b may be connected to each other by the regions positioned on the inner surfaces of the body 100 along the through-holes 110. The second internal electrode 230 positioned on the through-holes 110, the second internal electrode 230 positioned on the first surface 100a, and the second internal electrode 230 positioned on the second surface 100b may be connected to each other. The first internal electrode 210 may be a metallic material.

The dielectric layer 220 may be positioned on the first internal electrode 210. The dielectric layer 220 may be positioned on the first internal electrode 210 formed inside the body 100 along the through-holes 110, and be in contact with the surface of the first internal electrode 210. The dielectric layer 220 may be positioned on the first internal electrode 210 formed on the first surface 100a and the second surface 100b. The dielectric layer 220 may be in contact with the surface of the first internal electrode 210 on the first surface 100a and the second surface 100b.

The dielectric layers 220 may be formed of a ZAZ layer which is a composite layer of a ZrO₂ layer, an Al₂O₃ layer, and a ZrO₂ layer. Alternatively, the dielectric layers 220 may be formed of one of metal oxides such as Al₂O₃, ZrO₂, HfO₂, etc. In some embodiments, the dielectric layers 220 may be formed of a combination of metal oxides such as Al₂O₃, ZrO₂, HfO₂, etc.

The second internal electrode 230 may be positioned on the dielectric layer 220. The second internal electrode 230 may be positioned on the dielectric layer 220 formed inside the body 100 along the through-holes 110. The second internal electrode 230 may be in contact with the surface of the dielectric layer 220 formed inside the body 100. Also, the second internal electrode 230 may be positioned on the dielectric layer 220 formed on the first surface 100a and the second surface 100b of the body 100. The second internal electrode 230 may be in contact with the surface of the dielectric layer 220 formed on the first surface 100a and the second surface 100b. Accordingly, on the through-holes 110, the first surface 100a, and the second surface 100b, the second internal electrode 230 may face the first internal electrode 210 with the dielectric layer 220. The dielectric layer 220 may be interposed between the first internal electrode 210 and the second internal electrode 230 such that the first internal electrode 210 and the second internal electrode 230 are insulated by the dielectric layer 220. The second internal electrode 230 may be formed so as to fill the insides of the body 100 formed along the through-holes 110. The inner spaces of the body 100 formed along the through-holes 110 may be partially filled by the first internal electrode 210 and the dielectric layer 220, and the remaining inner spaces that are not filled by the first internal electrode 210 and the dielectric layer 220 may be filled by the second internal electrode 230. The second internal electrode 230 may be positioned on the sections of the first surface 100a of the body 100 between the through-holes 110 adjacent to each other, and may be positioned on the sections of the second surface 100b of the body 100 between the through-holes 110 adjacent to each other. Accordingly, in the second internal electrode 230, the regions positioned on the through-holes 110 adjacent to each other may be connected to each other by the regions positioned on the first surface 100a and second surface 100b of the body 100. In the second internal electrode 230, the regions positioned on the first surface 100a of the body 100 and the regions positioned on the second surface 100b may be connected to each other by the regions positioned on the through-holes 110. The second internal electrode 230 positioned on the through-holes 110, the second internal electrode 230 positioned on the first surface 100a, and the second internal electrode 230 positioned on the second surface 100b may be connected to each other. The second internal electrode 230 may be a metallic material.

The first external electrodes 300 may be connected to the first internal electrode 210. A first external electrode 300 may be disposed so as to be in contact with the first internal electrode 210 positioned on the first surface 100a of the body 100, thereby being connected to the first internal electrode 210. The other first external electrode 300 may be disposed so as to be in contact with the first internal electrode 210 positioned on the second surface 100b of the body 100, thereby being connected to the first internal electrode 210. Each first external electrode 300 may be disposed so as to overlap at least one through-hole 110. A portion of each first external electrode 300 may overlap some through-holes 110.

Each first external electrode 300 may include a sub electrode portion 310 and a main electrode portion 320.

The sub electrode portion 310 may be connected to the first internal electrode 210. The sub electrode portion 310 may be positioned on the first internal electrode 210 positioned on the first surface 100a of the body 100, such that at least some portions are in contact with the first internal electrode 210. At least a portion of the sub electrode portion 310 may be positioned on the first internal electrode 210 positioned on the second surface 100b of the body 100. The sub electrode portion 310 may be positioned on the first internal electrode 210 positioned on the second surface 100b of the body 100 such that at least some portions are in contact with the first internal electrode 210. The side surface of the sub electrode portion 310 may be in contact with the dielectric layer 220, and the second internal electrode 230 may be positioned on the dielectric layer 220 on the side surface of the sub electrode portion 310. The dielectric layer 220 and the second internal electrode 230 positioned on the side surface of the sub electrode portion 310 may be connected to the dielectric layer 220 and the second internal electrode 230 positioned on the first surface 100a or the second surface 100b, respectively.

The main electrode portion 320 may be connected to the sub electrode portion 310. The main electrode portion 320 may be positioned on the sub electrode portion 310 so as to be in contact with the sub electrode portion 310. The main electrode portion 320 may face the body 100 with the sub electrode portion 310 interposed therebetween.

On the edge portion of the sub electrode portion 310, the dielectric layer 220 and the second internal electrode 230 may be formed. Accordingly, the area of the main electrode portion 320 in a plane direction (the plane direction along the DRL axis and the DRW axis) may be smaller than that of the sub electrode portion 310. The cross-sectional area of the main electrode portion 320 on a plane parallel with the first surface 100a may be smaller than the cross-sectional area of the sub electrode portion 310 on a plane parallel with the first surface. The main electrode portion 320 may be included in the sub electrode portion 310. On the sub electrode portion 310, the dielectric layer 220 and the second internal electrode 230 may be disposed apart from the main electrode portion 320. On the sub electrode portion 310, the protective layer 500 may be interposed between the dielectric layer 220 and the main electrode portion 320 and between the second internal electrode 230 and the main electrode portion 320. The second internal electrode 230 and the main electrode portion 320 on the sub electrode portion 310 may be insulated by the protective layer 500 interposed therebetween. The dielectric layer 220 and the second internal electrode 230 positioned on the edge portion of the sub electrode portion 310 may be connected to the dielectric layer 220 and the second internal electrode 230 on the side surface of the sub electrode portion 310, respectively.

The second external electrodes 400 may be connected to the second internal electrode 230. A second external electrode 400 may be positioned on the second internal electrode 230 positioned on the first surface 100a of the body 100. The second external electrode 400 may be in contact with at least a portion of the second internal electrode 230 positioned on the first surface 100a of the body 100. Also, the other second external electrode 400 may be positioned on the second internal electrode 230 positioned on the second surface 100b of the body 100. The second external electrode 400 may be in contact with at least a portion of the second internal electrode 230 positioned on the second surface 100b of the body 100. Each second external electrode 400 may have a portion overlapping some through-holes 110. Each second external electrode 400 may be disposed so as to overlap at least one through-hole 110 in the thickness direction (DRH-axis direction).

The protective layers 500 may be positioned on the capacitor portion 200 of the first surface 100a and second surface 100b of the body 100. The protective layers 500 may contain an insulating material such as a solder resist. The protective layers 500 may cover the second internal electrode 230. Each protective layer 500 may have openings OP that expose at least a portion of the first external electrode 300 and at least a portion of the second external electrode 400. Also, each protective layer 500 may cover at least a portion of the surface of a sub electrode portion 310. Some portions of the protective layers 500 may be positioned on the side surfaces of the main electrode portions 320. Further, some portions of the protective layers 500 may be positioned on the end portions of the second external electrodes 400 and the end portions of the dielectric layer 220, so as to be in contact with the end portions of the second external electrodes 400 and the end portions of the dielectric layer 220. The first internal electrode 210 and the second external electrodes 400 may be electrically insulated by the protective layers 500 positioned between the end portions of the second external electrodes 400 and the side surfaces of the main electrode portions 320.

Although it has been described above that, in some embodiments, the first external electrodes 300 and the first internal electrode 210 are connected and the second external electrodes 400 and the second internal electrode 230 are connected, the connection relationship and configurations of the first and second external electrodes and the first and second internal electrodes are not limited by the terms. For example, each second external electrode 400 may include a sub electrode portion 310 that is connected to the first internal electrode 210, and a main electrode portion 320 that is positioned on the sub electrode portion 310, and the first external electrodes 300 may be connected to the second internal electrode.

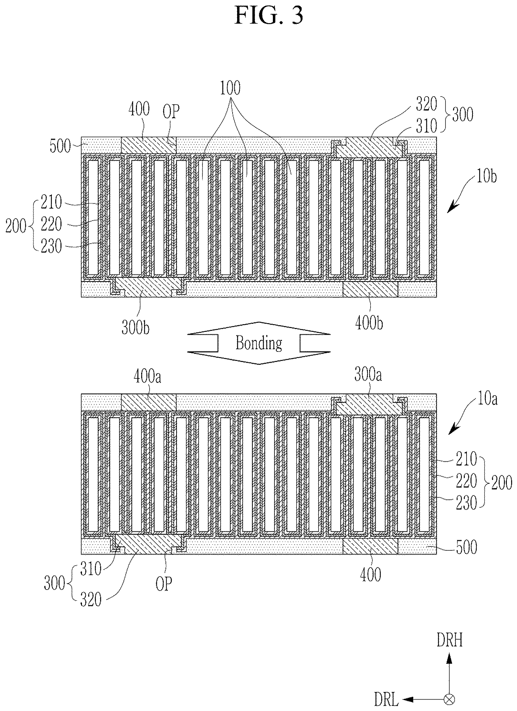

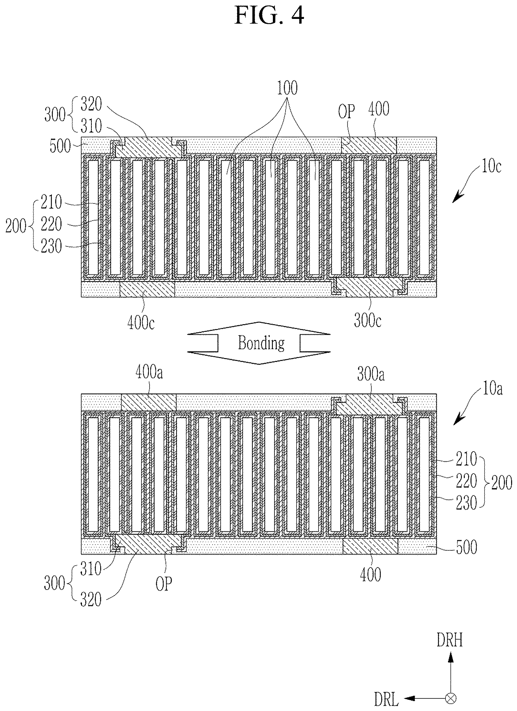

FIG. 3 is a cross-sectional view illustrating a connection of capacitors 10 as shown in FIG. 2, and FIG. 4 is a cross-sectional view illustrating another example of a capacitor connection.

Referring to FIG. 3, two or more capacitors 10 according to the present embodiment may be connected in parallel. In order to connect the capacitors 10 in parallel, a first external electrode 300a of a first capacitor 10a may be connected to a second external electrode 400b of a second capacitor 10b, and a second external electrode 400a of the first capacitor 10a may be connected to a first external electrode 300b of the second capacitor 10b. The first capacitor 10a and the second capacitor 10b may be stacked and bonded as described above. In this way, two or more capacitors may be connected in parallel. The first external electrode 300a positioned on the first surface 100a of the first capacitor 10a and the second external electrode 400b positioned on the second surface 100b of the second capacitor 10b may be coupled, and the second external electrode 400a positioned on the first surface 100a of the first capacitor 10a and the first external electrode 300b positioned on the second surface 100b of the second capacitor may be coupled. By this coupling, the first capacitor 10a and the second capacitor 10b may be connected in parallel.

Referring to FIG. 4, two or more capacitors 10 according to the present embodiment may be connected in parallel in a manner different from that shown in FIG. 3. In order to connect the capacitors 10 in parallel, the first external electrode 300a of the first capacitor 10a may be connected to a first external electrode 300c of a third capacitor 10c, and the second external electrode 400a of the first capacitor 10a may be connected to a second external electrode 400c of the third capacitor 10c. The first capacitor 10a and the third capacitor 10c may be stacked and bonded as described above. In this way, two or more capacitors may be connected in parallel. The first external electrode 300a positioned on the first surface 100a of the first capacitor 10a and the first external electrode 300c positioned on the second surface 100b of the third capacitor 10c may be coupled, and the second external electrode 400a positioned on the first surface 100a of the first capacitor 10a and the second external electrode 400c positioned on the second surface 100b of the third capacitor 10c may be coupled. By this coupling, the first capacitor 10a and the third capacitor 10c may be connected in parallel.

In FIGS. 3 and 4, the examples in which two capacitors 10 are connected in parallel are shown; however, three or more capacitors 10 may be connected in parallel in the same manners. Also, the coupling manners shown in FIGS. 3 and 4 may be used together to connect capacitors in parallel.

By connecting two or more capacitors 10 in parallel as described above, it is possible to increase the capacitance without increasing the thickness of the capacitors 10. Further, since it is possible to increase the capacitance even if the aspect ratio of the capacitors 10 is reduced, atomic layer deposition in the manufacturing process can be effectively performed by manufacturing capacitors 10 with a low aspect ratio. Furthermore, when capacitors are connected in the same manner as that in FIG. 3 or 4, they are all connected in parallel. Accordingly, it is possible to easily connect capacitors without distinguishing between first external electrodes and second external electrodes.

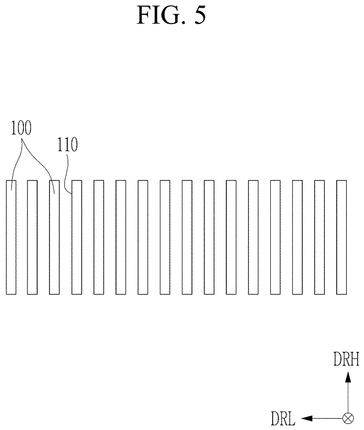

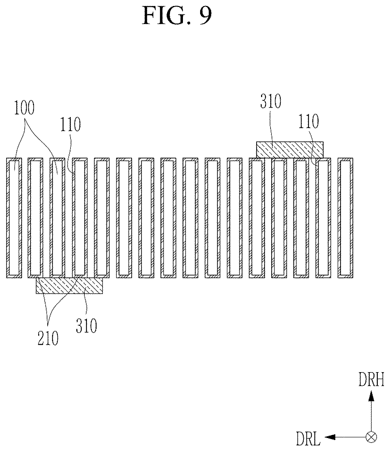

Hereinafter, a manufacturing method of a capacitor 10 according to an embodiment will be described with reference to FIGS. 5 to 14 together with FIGS. 1 and 2.

FIGS. 5 to 14 are cross-sectional views illustrating a manufacturing method of a capacitor according to an embodiment.

Referring to FIG. 5, a body 100 with a plurality of through-holes 110 is prepared. The prepared body 100 may be in a state where the plurality of through-holes 110 has been formed. The body 100 may be formed of anodizing aluminum oxide (AAO). The plurality through-holes 110 may be fine pores formed in the body 100 by an anodization method.

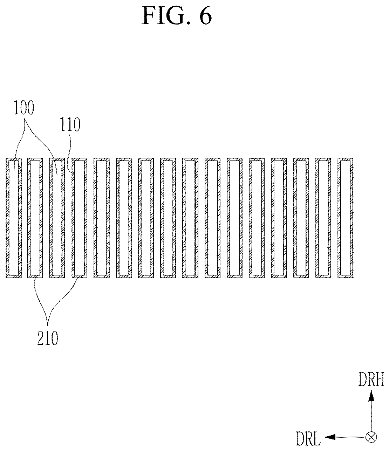

Referring to FIG. 6, a first internal electrode 210 is formed of a metallic material on the body 100. The first internal electrode 210 is formed on the inner surfaces of the body 100 positioned inside the through-holes 110. Also, the first internal electrode 210 is formed on the first surface 100a and second surface 100b of the body 100. The first internal electrode 210 formed on the inner surfaces of the body 100 along the through-holes 110 may be connected to the first internal electrode 210 formed on the first surface 100a of the body 100 and the first internal electrode 210 formed on the second surface 100b. The first internal electrode 210 may be formed by atomic layer deposition (ALD). As an example, the first internal electrode 210 may be formed of a metal material such as titanium nitride (TiN). The first internal electrode 210 may be formed to a thickness of 2.9 nm to 3.1 nm, but is not limited thereto.

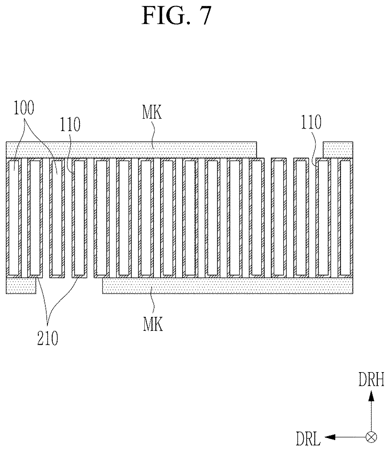

Referring to FIGS. 7 to 9, sub electrode portions 310 may be formed on the first surface 100a and/or second surface 100b of the body 100. In order to form the sub electrode portions 310, first, masks MK may be formed on the first surface 100a and/or second surface 100b of the body 100. In order to form the masks MK, a photoresist may be applied to the first surface 100a and/or second surface 100b of the body 100, and some portions are etched. If the photoresist is etched, the first internal electrode 210 positioned on the first surface 100a and/or second surface 100b of the body 100 may be exposed. The locations where the photoresist is etched may include regions where some through-holes 110 are positioned. On the portions from which the photoresist has been etched, sub electrode portions 310 are formed. The sub electrode portions 310 may be formed by applying a conductive material such as Cu, Sn, Au, or the like. If the sub electrode portions 310 are formed, the residual photoresist is removed.

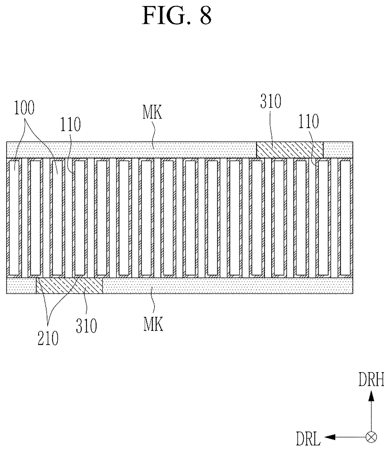

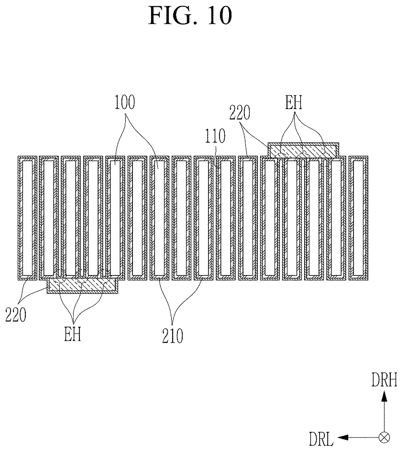

Referring to FIG. 10, a dielectric layer 220 may be formed by applying a dielectric material. The dielectric material may cover the first internal electrode 210 on the first surface 100a and second surface 100b of the body 100, and may cover the first internal electrode 210 formed on the inner surfaces of the body 100 along the through-holes 110. Further, the dielectric material may cover the sub electrode portions 310 that are in contact with the first internal electrode 210 on the first surface 100a and second surface 100b of the body 100. Furthermore, the dielectric material may cover the sub electrode portions 310 (the reference symbol "EH" in FIG. 8) exposed between the through-holes 110. Accordingly, the dielectric layer 220 may cover the first surface 100a and second surface 100b of the body 100, and the first internal electrode 210 and the sub electrode portions 310 on the through-holes 110. As an example, the dielectric material may be deposited by atomic layer deposition (ALD).

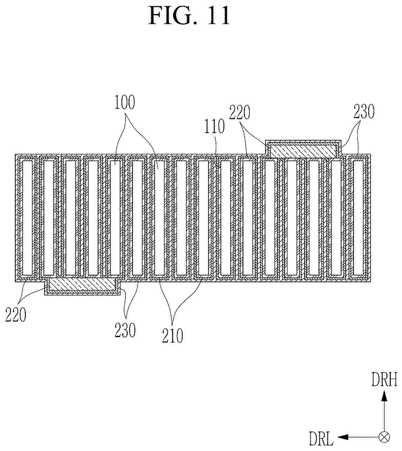

Referring to FIG. 11, a second internal electrode 230 may be formed on the dielectric layer 220. The second internal electrode 230 may cover the dielectric layer 220 on the first surface 100a and second surface 100b of the body 100. The second internal electrode 230 may cover the dielectric layer 220 formed on the inner surfaces of the body 100 along the through-holes 110. The second internal electrode 230 may fill the inner spaces of the body 100 formed by the through-holes 110. Accordingly, the empty spaces inside the body 100 are eliminated by the second internal electrode 230. Therefore, it is possible to prevent voids from being generated inside the through-holes 110. The second internal electrode 230 may be continuously formed on the first surface 100a and second surface 100b of the body 100 and the through-holes 110. Since the dielectric layer 220 is formed on the portions of the first external electrodes 300 overlapping some through-holes 110, the second internal electrode 230 and the first internal electrode 210 that are formed on the through-holes 110 may be insulated. Further, the second internal electrode 230 may cover the first external electrodes 300 disposed on the first surface 100a and the first external electrodes 300 disposed on the second surface 100b of the body 100, but is not in contact with the first external electrodes 300 since the dielectric layer 220 already formed on the first external electrodes 300 is interposed between the second internal electrode 230 and the first external electrodes. Therefore, the second internal electrode 230 and the first external electrodes 300 may be insulated. The second internal electrode 230 may be formed on a conductive material such as titanium nitride (TiN). As an example, the second internal electrode 230 may be formed by atomic layer deposition (ALD). After the atomic layer deposition is performed to form the second internal electrode 230, an additional process of filling the insides of the through-holes 110 may be performed. The additional process may be performed using a conductive material, and the second internal electrode 230 may be formed together with regions subjected to the additional process through the atomic layer deposition. However, the method of forming the second internal electrode 230 is not limited thereto.

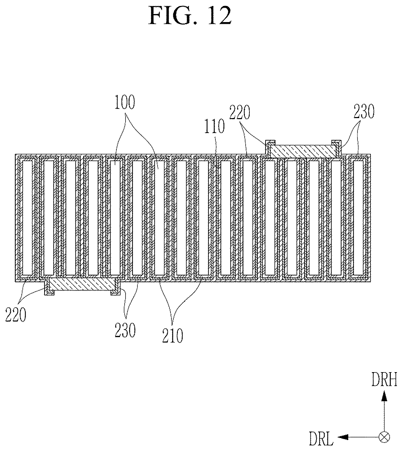

Referring to FIG. 12, some portions of the portions of the second internal electrode 230 and the dielectric layer 220 overlapping the first internal electrode 210 on the first surface 100a and second surface 100b of the body 100 are etched. Some portions of the dielectric layer 220 and the second internal electrode 230 formed on the first internal electrode 210 may be removed. By the etching, at least a portion of the portion of the first internal electrode 210 that is on the first surface 100a of the body 100 and faces the first surface 100a of the body 100 may be exposed. Further, by the etching, at least a portion of the portion of the first internal electrode 210 that is on the second surface 100b of the body 100 and faces the second surface 100b of the body 100 may be exposed.

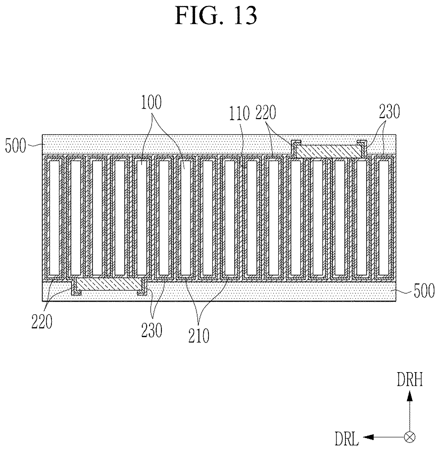

Referring to FIG. 13, protective layers 500 may be formed on the first surface 100a and second surface 100b of the body 100. The protective layers 500 may be formed so as to cover the second internal electrode 230 formed on the first surface 100a and second surface 100b of the body100. Further, the protective layers 500 may be formed so as to cover the first internal electrode 210 exposed by performing the above-mentioned etching on the second internal electrode 230 and the dielectric layer 220. The protective layers 500 may be formed of an insulating material such as a solder resist.

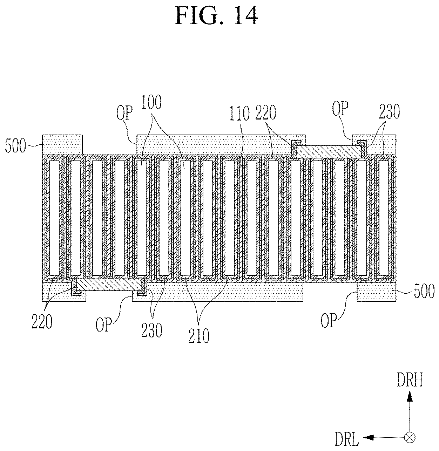

Referring to FIG. 14, openings OP may be formed by performing etching on the protective layers 500. The openings OP may be formed so as to overlap some of the through-holes 110. By the openings OP in the protective layers 500, some portions of the second internal electrode 230 on the first surface 100a and the second surface 100b may be exposed. Further, by the openings OP in the protective layers 500, some portions of the sub electrode portions 310 may be exposed. The openings OP may be formed by a lithography process.

Referring to FIG. 2 again, on the portions of the sub electrode portions 310 exposed by performing etching the protective layers 500, main electrode portions 320 may be formed. The main electrode portions 320 may be formed by depositing a conductive material on the portions of the sub electrode portions 310 from which the dielectric layer 220 and the second internal electrode 230 have been removed.

The sub electrode portions 310 and the main electrode portions 320 together may constitute first external electrodes 300. Further, on the portions of the second internal electrode 230 exposed by performing etching on the protective layers 500, second external electrodes 400 are formed. The main electrode portions 320 and the second external electrodes 400 may be formed of a conductive material such as Cu, Sn, Au, or the like.

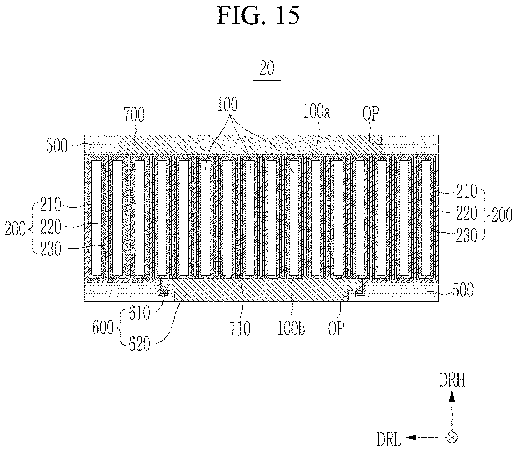

FIG. 15 is a cross-sectional view schematically illustrating a capacitor 20 according to another embodiment. The capacitor 20 according to the present embodiment is similar to the capacitor 10 described with reference to FIGS. 1-14. A detailed description of identical components will not be made.

Referring to FIG. 15, in the capacitor 20 according to the present embodiment, a second external electrode 400 may be disposed on a first surface 100a of a body 100, and a first external electrode may be disposed on a second surface 100b of the body 100. The first external electrode 300 may be positioned only on the second surface 100b of the body 100, and the second external electrode 400 may be positioned only on the first surface 100a of the body 100. The first external electrode 300 may be formed widely on the second surface 100b of the body 100. Accordingly, the first external electrode 300 may be connected to second external electrodes 400 of a number of different capacitors. Further, the second external electrode 400 may be formed widely on the first surface 100a of the body 100. Accordingly, the second external electrode 400 may be connected to first external electrodes 300 of a number of different capacitors.

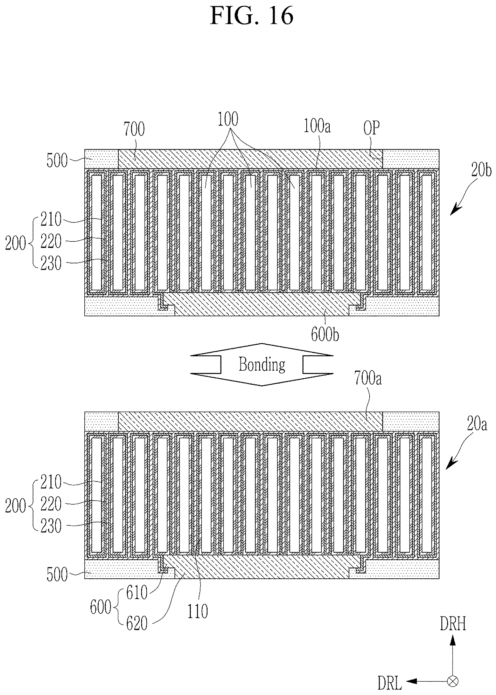

FIG. 16 is a cross-sectional view schematically illustrating a connection of capacitors as shown in FIG. 15.

Referring to FIG. 16, two or more capacitors according to the present embodiment may be connected in series. In order to connect capacitors in series, a second external electrode 700a of a first capacitor 20a may be connected to a first external electrode 300 of a second capacitor 20b. The first capacitor 20a and the second capacitor 20b may be stacked and bonded as described above. In this way, two or more capacitors may be connected in series. Further, other capacitors may be connected to the first capacitor 20a and/or the second capacitor 20b. In this way, three or more capacitors may be connected in series. By connecting a number of capacitors in series, it is possible to improve the withstand voltage performance.

While this invention has been described in connection with what is presently considered to be practical embodiments, it is to be understood that the invention is not limited to the disclosed embodiments. On the contrary, it is intended to cover various modifications and equivalent arrangements included within the spirit and scope of the appended claims.

### <Description of symbols>

10: Capacitor
100: Body
110: Through-hole
210: First internal electrode
220: Dielectric layer
230: Second internal electrode
300: First external electrode
310: Sub electrode portion
320: Main electrode portion
400: Second external electrode
500: Protective layer

## Claims

1. A capacitor comprising:
a body that has through-holes extending from a first surface to a second surface,
a first internal electrode disposed on inner surfaces of the body positioned inside the through-holes, on the first surface of the body, and on the second surface of the body,
a dielectric layer disposed on the first internal electrode,
a second internal electrode disposed on the dielectric layer,
a first external electrode disposed on the first surface and electrically connected to the first internal electrode, and
a second external electrode disposed on the second surface and electrically connected to the second internal electrode.

2. The capacitor of claim 1, wherein
the first internal electrode disposed on the inner surfaces of the body, the first internal electrode disposed on the first surface of the body, and the first internal electrode disposed on the second surface of the body are connected to one another, and/or
wherein
the dielectric layer is disposed on each of the inner surfaces of the body, the first surface of the body, and the second surface of the body, and
the second internal electrode is disposed on each of the inner surfaces of the body, the first surface of the body, and the second surface of the body.

3. The capacitor of claim 2, wherein
the second internal electrode disposed on the inner surfaces of the body, the second internal electrode disposed on the first surface of the body, and the second internal electrode disposed on the second surface of the body are connected to one another.

4. The capacitor of claim 1, wherein:
another second external electrode is disposed on the first surface of the body, and
another first external electrode is disposed on the second surface of the body, and/or
wherein
the second internal electrode fills the inner spaces of the body formed by the through-holes.

5. The capacitor of claim 1, wherein
the first external electrode comprises a sub electrode portion in contact with the first internal electrode, and a main electrode portion in contact with the sub electrode portion, and
the cross-sectional area of the main electrode portion on a plane parallel with the first surface of the body is smaller than the cross-sectional area of the sub electrode portion on a plane parallel with the first surface of the body.

6. The capacitor of claim 5, wherein
the dielectric layer and the second internal electrode extend from the first surface of the body to the upper surface of at least a portion of an outer portion on the sub electrode portion.

7. The capacitor of claim 6, wherein
between the second internal electrode disposed on the outer portion of the sub electrode portion and the main electrode portion, a protective layer is disposed.

8. The capacitor of claim 1, further comprising:
protective layers disposed on the first surface of the body and on the second surface of the body, and at least partially cover the second internal electrode,
wherein the protective layers have openings that expose at least a portion of the first external electrode and at least a portion of the second external electrode.

9. The capacitor of claim 1, wherein
the body comprises anodizing aluminum oxide (AAO).

10. A manufacturing method of a capacitor, the method comprising:
preparing a body with through-holes extending from the first surface to the second surface, and forming a first internal electrode on inner surfaces of the body positioned inside the through-holes, the first surface of the body, and the second surface of the body,
forming a sub electrode portion connected to the first internal electrode,
forming a dielectric layer on the first internal electrode,
forming a second internal electrode on the dielectric layer,
disposing a main electrode portion on the sub electrode portion such that the main electrode portion and the sub electrode portion together form a first external electrode, and
forming a second external electrode on the second internal electrode.

11. The manufacturing method of the capacitor according to claim 10, wherein
the forming of the sub electrode portion comprises the following:
forming a mask on the first surface of the body;
exposing some portions of the first internal electrode by etching the mask; and
applying a conductive material on the area where the mask has been etched, and/or
wherein
the forming of the dielectric layer comprises covering the portions of the sub electrode portion exposed between the through-holes by a dielectric material.

12. The manufacturing method of the capacitor according to claim 10, wherein
the forming of the dielectric layer comprises covering the sub electrode portion on the first surface by a dielectric material, and
the forming of the second internal electrode includes covering the dielectric material on the sub electrode portion by a conductive material, and/or
wherein
the forming of the main electrode portion comprises the following:
removing at least some portions of the dielectric layer on the sub electrode portion and at least some portions of the second internal electrode on the sub electrode portion; and
depositing a conductive material on the portion of the upper surface of the sub electrode portion where the dielectric layer and the second internal electrode have been removed.

13. The manufacturing method of the capacitor according to claim 10, wherein
the forming of the second internal electrode comprises filling the inner spaces of the body formed along the through-holes with a conductive material.

14. A capacitor assembly comprising:
a first capacitor and a second capacitor, each of which comprises the following:
a body that has through-holes extending from a first surface to a second surface,
a first internal electrode disposed on the inner surfaces of the body positioned inside the through-holes, on the first surface of the body, and on the second surface of the body,
a dielectric layer disposed on the first internal electrode,
a second internal electrode disposed on the dielectric layer,
a first external electrode disposed on the first surface and is connected to the first internal electrode, and
a second external electrode disposed on the second surface and is connected to the second internal electrode,
wherein the first external electrode of the first capacitor and the second external electrode of the second capacitor are connected to each other.

15. The capacitor assembly of claim 14, wherein
another second external electrode is disposed on the first surfaces, and another first external electrode is disposed on the second surfaces, and
the first external electrode on the first surface of the first capacitor and the second external electrode on the second surface of the second capacitor are connected to each other, and
the second external electrode on the first surface of the first capacitor and the first external electrode on the second surface of the second capacitor are connected to each other, and/or
wherein
another second external electrode is disposed on the first surfaces, and another first external electrode is disposed on the second surfaces, and
the first external electrode on the first surface of the first capacitor and the first external electrode on the second surface of the second capacitor are connected to each other, and
the second external electrode on the first surface of the first capacitor and the second external electrode on the second surface of the second capacitor are connected to each other.
